(19) **Europäisches Patentamt / European Patent Office / Office européen des brevets**

(11) **EP 1 628 257 B1**

(12) **EUROPEAN PATENT SPECIFICATION**

(45) Date of publication and mention
of the grant of the patent:
**03.10.2007 Bulletin 2007/40**

(51) Int Cl.:
**G06T 1/00** (2006.01)

(21) Application number: **05017388.9**

(22) Date of filing: **10.08.2005**

(54) **Tampering detection of digital data using fragile watermark**

Erkennung von Änderungen in digitalen Daten mittels empfindlichen Wasserzeichens

Détection de modification frauduleuse de données numériques en utilisant un tatouage numérique fragile

(84) Designated Contracting States:
**DE FR GB**

(30) Priority: **17.08.2004 SG 200404492**

(43) Date of publication of application:
**22.02.2006 Bulletin 2006/08**

(73) Proprietor: **Sony Corporation
Tokyo 141-0001 (JP)**

(72) Inventors:
• **Sun, Xiaobing**
 **Sony Electronics (Singap.) Pte Ltd.
Singap. Science Park II
Singapore 117684 (SG)**
• **Zhang, Jian**
 **Sony Electronics (Singap.) Pte Ltd.
Singap. Science Park II
Singapore 117684 (SG)**
• **Lu, Wei**
 **Sony Electronics (Singap.) Pte Ltd.
Singap. Science Park II
Singapore 117684 (SG)**
• **Okada, Kanzo**
 **Sony Electronics (Singap.) Pte Ltd.
Singap. Science Park II
Singapore 117684 (SG)**

(74) Representative: **Melzer, Wolfgang et al
Patentanwälte
Mitscherlich & Partner,
Sonnenstrasse 33
80331 München (DE)**

(56) References cited:
**US-A1- 2003 099 373    US-A1- 2003 147 547**

• FEILONG LIU ET AL: "An improved block dependent fragile image watermark" MULTIMEDIA AND EXPO, PISCATAWAY, NJ, USA,IEEE, vol. 2, 6 July 2003 (2003-07-06), pages 501-504, XP010650602 ISBN: 0-7803-7965-9
• KE DING ET AL: "A novel fragile watermark applying in verification" NEURAL NETWORKS AND SIGNAL PROCESSING, 2003. PROCEEDINGS OF THE 2003 INTERNATIONAL CONFERENCE ON NANJING, CHINA , PISCATAWAY, NJ, USA,IEEE, vol. 2, 14 December 2003 (2003-12-14), pages 1501-1504, XP010691802 ISBN: 0-7803-7702-8
• UTKU CELIK M ET AL: "Hierarchical watermarking for secure image authentication with localization" IEEE TRANSACTIONS ON IMAGE PROCESSING IEEE USA, vol. 11, no. 6, June 2002 (2002-06), pages 585-595, XP002350949 ISSN: 1057-7149
• SHIH-CHANG HSIA ET AL: "A high robust watermarking technique using sub-band filtering" MULTIMEDIA MODELLING CONFERENCE, 2004. PROCEEDINGS, PISCATAWAY, NJ, USA,IEEE, 5 January 2004 (2004-01-05), pages 72-78, XP010681785 ISBN: 0-7695-2084-7

**Description**

Field of the invention

The present invention relates to methods for modifying ("watermarking") digital data, and in particular to methods which modify the data such that subsequent tampering with the data can be recognised. The invention further relates to methods for recognising the tampering. The invention also relates to optionally hiding additional data in the digital data and recovering the hidden data at a later time. It also relates to apparatus for performing these methods.

Background of Invention

Digital watermarking is a technique for inserting information into digital content data such as digital audio data, image data and video data. The watermark (WM) is embedded into the content data directly (not as an appendix) and is usually not hearable (in the case of audio data) or visible (in the case of image or video data). It does not affect the normal use of the content data. However, the watermark can be extracted from the watermarked content data, or detected within the watermarked content data. One common use for watermarks is to identify the ownership of the content data for copyright protection. Such watermarks need to be robust to survive common image manipulations such as compression, scaling, rotation and even A/D and D/A conversions etc.

However, another use for watermarks is authentication, to detect when content data has been tampered with, e.g. to detect that a portion of an image has been modified, such as by cutting and pasting another image onto part of it. Some examples of tampering with video footage are shown in the movies Mission Impossible and Speed I, in which someone had deliberately changed the video content of a safety monitoring system. Such things may also happen in real life. In the current world as terrorism becomes a more important threat to human life, the extensive use of video monitoring systems is becoming more important, and it is vital to be able to authenticate that this video footage has not been tampered with.

In the case of authentication, the watermark is added in such a way that any tampering with the content data can be detected. The watermark used for authentication needs to be fragile, in the sense that a small alteration to the watermarked content data can be detected, so that one can tell if the digital contents have been altered since the embedding of the watermark.

Techniques for fragile watermarking have been proposed in many papers and patents as listed in the references. These techniques can be classified into two classes based on the ways in which they define allowable alterations: hard and soft fragile watermarking [1]. Hard fragile watermarks are very sensitive and can detect very small alterations such as a 1-bit modification to a single pixel. Some examples of hard fragile watermark are given in [2] ~ [7]. The methods proposed in [2] ~ [5] work in the image pixel domain and can determine the locations of the possible alterations. In [2], the data value of an image is modified according the watermark bitmap and a random look up table. The main drawback of the method is that the watermarking scheme is very easy to attack. An improvement to [2] is proposed in [3] which determines the watermark bit to be embedded in any given pixel using the neighbor of that pixel. Thus it is very difficult to break the watermarking scheme. A very simple watermarking scheme is proposed in [4] which hides the checksum of an image to some randomly selected pixel positions. [5] introduces a block based watermarking scheme using a secret key and a hash function to produce the watermarking bit. It is very sensitive to any alteration. [6] and [7] are watermarking schemes used for compressing image domain data in that the watermarking bits are embedded into DCT coefficients. A common problem of [6] and [7] is that they lack the ability to determine the altering positions.

Soft fragile watermarking techniques are not as sensitive as hard fragile watermarking in that they allow some normal manipulations such as image compression, translation, and intensity adjustment etc as long as the image content or quality are not greatly changed. [1] and [8] show some examples of soft fragile watermarking.

In summary, the above mentioned hard fragile watermarking schemes lack one or more of the following desired properties: 1) The watermarking scheme should be sensitive enough to detect small alterations; 2) The scheme should make very small modifications to the original content data when embedding the watermark; 3) The possible altering positions can be determined; 4) The watermarking algorithm should be simple enough for easy implementation; 5) The scheme should be very difficult for a third party to break.

From US 2003/147547 A1 it is known a method for watermarking images in which digital watermarks are embedded in image data in order to enable authentication of the image data and/or replacement of rejected portions of the image data, wherein authentication codes are derived by comparing selected discrete cosine transform coefficients within DCT data derived from the original, spatial-domain image data and the authentication codes thus generated are embedded in DCT coefficients other than the ones which were used to derive the authentication codes.

Summary of the Invention

The present invention as defined in the claims aims to provide a new and useful technique for watermarking content data.

In general terms, the present invention proposes that content data composed of a set of items having a data value (for example, if the content data is image data, the items may be pixels of the image data and the data values may be grey-scale values or luminance values) is partitioned into subsections having same size. A secret key is used to associate items of the subsections into groups, each group including an item from each of the subsections. At least one item within each group is modified using a value derived from all items in the group. Thus, watermarked data is produced.

When authentication is to be carried out, the groups of data values are again extracted using the secret keys, and it is determined whether the values are consistent with the modification process described above. If not, all the data values of the group are regarded as suspect, since at least one of them has been tampered with after the watermarking.

Preferred embodiments of the watermarking scheme of the invention have the five desired properties listed above.

Specifically, compared with the other fragile watermark methods, embodiments of the present invention may perform minimal modification to the original data, since in certain embodiments a modification is only required to at most one data value of each group (and as discussed below, that modification may be a very small one).

Despite this, embodiments of the method may be sensitive to small tampering.

Embodiments of the method may be computationally simple, both at the watermarking stage and the authentication stage. For example, each group can be defined as a respective item of the first subsection and items of the other subsections which correspond to it according to a respective permuted sequence produced using at least one secret key.

Thus, watermarked data produced by embodiments may be the highly resistant to attacks, since the permutation of the sequences means that during the watermarking subtle correlations are introduced between groups of items which are distant in the content data.

The modification (watermarking) step of the method may be performed in one of several ways. A first possibility is to make use of a string of watermark data (called here a watermark bitmap), which may for example be generated automatically using a key (which may optionally be secret, for increased robustness). Note that the embedded watermark bitmap may optionally be data (e.g. secret data) which will later be extracted from the watermarked content data. In this case, the purpose of performing the embedding/detection may actually be to transmit/receive the watermark bitmap, rather than to perform authentication of the content data.

In the case that a watermark bitmap is embedded, the modification embeds at least one respective bit from the string of watermark data into the set of data values associated with each said group of items. This may be done, for example, by using the data values associated with each item of each group to derive at least one binary characteristic value (e.g. a parity value), and comparing the characteristic value to a respective bit of the watermark bitmap. If the two are different, at least one of the data values of the group may be modified so as to change the characteristic value to match the watermark bit. Optionally, multiple watermark bits can be embedded into each group of data values ("concatenated watermarking").

Alternatively, the modification (watermarking) step can be performed (e.g. without making use of watermark data) by introducing a detectable redundancy into the content data. For example, the modification may modify at least one least significant bit of at least one data value of the group according to more significant bits of the data values of the group.

Certain embodiments of the invention are particularly suitable for watermarking image data, but alternatively the content data may be another form of digital data such as digital audio data. In the case that it is image data, it may be a still image or of a frame of a video image. The image may be black-and-white (i.e. the data values are grey scale values) or colour.

Furthermore, even in the case that the content data represents a still or video image, the method may be applied either in a pixel domain image or in a transformed domain. For example, the data may be transformed in the way employed in a scheme for compression of image/video files such as JPEG, MPEG1, MPEG2, MPEG4 and H.264. Such schemes typically transform the data on a block-by-block basis, and the data values of the content data represent amplitudes of spatial frequencies, e.g. DCT data. The method of the invention may be applied treating individual blocks as the "items" to be associated into groups, or alternatively treating the spatial frequency values as the items. Note that if the content data is supplied in the form of compressed data, the method may include a preliminary step of decompressing it, prior to the watermarking and subsequent recompression.

Many modifications are possible within the scope of the invention, particularly to enhance one or more of the desired properties of the method according to the sort of content data which is used.

For example, if the content data is image data it may be preferable to ensure that modifications are spread over all subsections of the image, or alternatively that they are limited to a peripheral subsection of the still image or frame. As a further example, if the content data is data transformed into the spatial frequency domain, the modification may be performed only for certain spatial frequency values, e.g. only for data values which are of intermediate spatial frequency.

A further possible enhancement of the invention is to define a second set of groups (i.e. associations between items of the first subsection and different respective items of each of the other subsections). These second groups can be used, in the way described above in relation to the first groups, to perform watermarking. Thus, there is "double" watermarking. Tampering with a given item would show up in both of the two groups associated with this item. This idea could in principle be extended further to include any number of sets of groups. Optionally, the definition of the subsections would not have to be identical for each of the watermarking operations, since that may result in less change to the original image.

Embodiments of the present invention typically belong to the technical category called hard fragile watermarking.

The invention may alternatively be expressed as an apparatus having a processor controlled by software which causes it to perform either of the two methods defined above.

Furthermore, the invention may be expressed as a computer program product (e.g. stored on a record carrier) which, when run by a computer apparatus having access to content data, causes the computer apparatus to perform either of the two methods defined above.

Brief Description of The Figures

Preferred features of the invention will now be described, for the sake of illustration only, with reference to the following figures in which:

Fig. 1 is composed of Fig. 1 (a) which is a schematic flow diagram illustrating a watermarking technique which is a first embodiment of the invention, in which a fragile watermark is embedded in image data in the image pixel domain, and Fig. 1(b) is a flow diagram illustrating an authentication technique for use with watermarked data produced using the watermarking technique of Fig. 1 (a);

Fig. 2(a) is an original image, and Fig. 2(b) shows the result of watermarking the image of Fig. 2(a) by the embodiment of Fig. 1, tampering with the image, and then marking with black dots the locations in which the possibility of tampering is detected by the method Fig. 1 (b);

Figure 3 illustrates schematically alternative ways of partitioning an image in the embodiment of Fig. 1 (a);

Figure 4 is a schematic flow diagram of a second embodiment of the invention;

Figure 5 is a schematic flow diagram of a third embodiment of the invention;

Figure 6 a schematic flow diagram of a fourth embodiment of the invention;

Figure 7 is a flow diagram of a further embodiment in which a watermark is embedded into a compressed image file; and

Figure 8 illustrates schematically a further embodiment in which double watermarks are embedded into blocked DCT coefficients of a compressed image.

Detailed Description of the embodiments

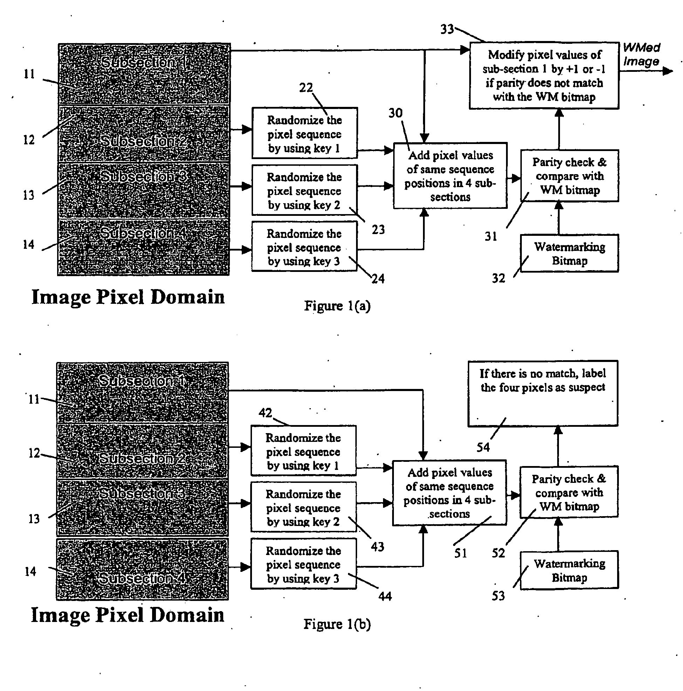

Referring to Fig. 1, a first embodiment of the invention is illustrated. This embodiment operates in the image pixel domain (although, as mentioned below, the invention is not limited in this respect in other embodiments). The image may be a grey-scale image or a colour image. For the purposes of the discussion below it will be assumed that the image is a gray-scale image such that each pixel is associated with a data value which is a gray-scale value. However, in the case that the image is a colour image, the embodiment may be applied without modification to data values which are the luminance component of a colour image (e.g. the Y component in NTSC's YIQ color image representation).

The embodiment has the following steps:

(1) The whole image field is divided into n (≥2) non-overlapping subsections 11, 12, 13, 14. For example, Fig. 1 illustrates the case n=4, and the simple case that each of the subsections is a horizontal stripe of the image. Each of the subsections has the same number of pixels.

(2) A sequence of pixels is defined for each of the subsections 11, 12, 13, 14. For example, each sequence may be defined as beginning at the top-left corner pixel of each subsection, from left to right for the first row, followed by the second row, and so on. The pixel sequence of the first subsection 11 is denoted by S1. The data value at pixel position $k$ of subsection $j$ is denoted as $p_j(k)$.

(3) The pixel sequences of the other three subsections 12, 13, 14 are randomly ranked by some random permutation function by using secret keys to generate 3 random sequences, denoted by S2, S3, S4. This is illustrated in blocks 22, 23, 24. For example, the permutation may be the randperm function in MATLAB with a known initial seed. This seed can be later used as a secret key for recovering the same random sequence when detecting the watermark. The pixel sequences can also be permuted manually in a pseudorandom way, and in this case the manually permuted sequences themselves should be kept as the secret keys.

(4) As shown in block 30, the data values of each of the pixels in subsection 11 is added to the data values in the corresponding positions of permuted sequence from the subsections 12, 13, 14. In other words, a number of groups is defined which is equal to the number of pixels in the subsection 11, each of these groups being composed of a respective one of the pixels in subsection 11, and a pixel from each of the other three subsections, and the data values of each of the pixels of the group are added together, to give a value $V(i)$, where the index $i$ labels the group (or equivalently the pixel of the first subsection 11). For example, if the 4 sequences are: $S1=(1, 2, 3, ...)$, $S2=(378, 1052, 765, ...)$, $S3=(1349, 125, 534, ...)$ and $S4=(476, 289, 1179, ...)$, then

$$V(1) = p_1(1) + p_2(378) + p_3(1349) + p_4(476) \, , \qquad (1)$$

$$V(2) = p_1(2) + p_2(1052) + p_3(125) + p_4(289) \, , \qquad (2)$$

$$V(3) = p_1(3) + p_2(765) + p_3(534) + p_4(1179) \, , \qquad (3)$$

and so on. For each group, the number of 1's in the summed value (binary expression) is counted. The parity (odd/even) of this number of 1's is decided. Thus, there is a parity value for each respective group of pixels.

(5) If the parity is odd, a parity bit 1 is used to describe the sum. Otherwise, a parity bit 0 is used. As illustrated in block 31, the parity bit for each group is compared with a respective bit of a watermark bitmap (i.e. a string in which each element is 0 or 1). The bitmap represented by block 32 can be either a known bitmap image, such as a company logo or a pseudorandom sequence. In the case of data hiding, the bitmap is data/information to be hidden in the image. The number of bits of the watermark bitmap is the same as the number of pixels for subsection 11 of the image. If the parity bit is same as the respective bit of the watermark bitmap, no modification is needed. If the parity bit is different from the respective bit of the watermark bitmap, a modification is made to the corresponding pixel of the first subsection 11 (in other embodiments of this invention, this can be generalised by making the modification to the corresponding bit of any one of the subsections 11, 12, 13, 14; optionally this may be different for different ones of the groups, perhaps according to some test applied to the data values of the group).

This modification is performed in the step illustrated as block 33. The modification process is as follows:

If the summed value $V(i)$ is odd, the data value in subsection 12 is changed to $p_1(i) = p_1(i)-1$.
If summed value $V(i)$ is even, the data value in subsection 1 (denoted by a) is changed to $p_1(i) = p_1(i) +1$.
It can be seen that this simple operation changes the parity of 1's of the summed value and thus makes it the same as the respective watermark bitmap value. In this way, the watermark bitmap is embedded into the original image, to generate a watermarked image.

It should be understood that steps 22, 23 and 24 may be performed in parallel, e.g. at the same time for three pixels of the same group. Each of these steps, and steps 60, 61 and 62, is performed in turn for each of the groups. In practical embodiments, any of steps 60, 61 and 62 may be performed in respect of a first given group at a time when steps 22, 23 and 24 are being performed in respect of a different one of the groups.

Detection of the watermark using the watermarked data is illustrated in Fig. 1(b). Again the image is portioned in the image pixel domain into the subsections 11, 12, 13, 14 (which are identical to those in Fig. 1(a)). Then, in steps 42, 43, 44 the pixels in these segments are permuted in the same fashion as in steps 22, 23, 24 and using the same secret key, so that the same groups of pixels are produced. The data values of each group are added (step 51), and in step 52 a parity bit representing the parity of the number of 1's in the summed value is compared with the respective bit of the same watermark bitmap used in Fig. 1(a). The watermark bitmap is known or may be regenerated in step 53. In step 54, any difference between the parity bit and the corresponding bit of the watermark bitmap is used to infer that there has been some tampering with at least one of the four pixels of the group. That is, all four pixels are suspect.

Note that it is possible that any one (or more) of the corresponding 4 pixel positions (one in each subsection) on the image has been modified, and it is impossible to judge which of these 4 positions has been modified. However, since almost any meaningful tampering must be done in a continuous area including many pixels (since changing the value of an isolated single pixel will normally not change any content of the image), that will result in the suspect pixels clustering at the real tampered area while scattering in other areas. Thus, the true tampering position can be determined by the relative clustering of the suspect pixels.

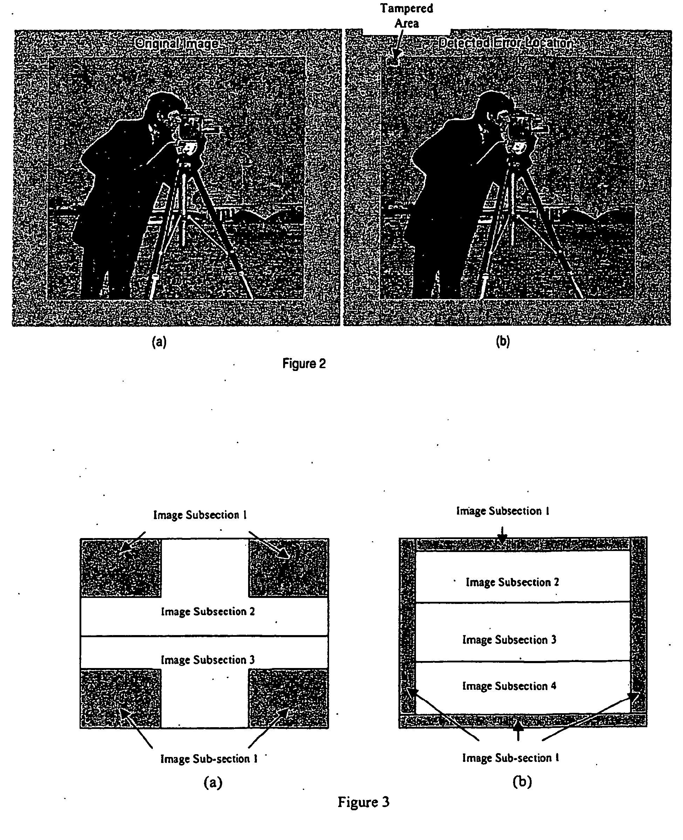

Such an example is shown in Figure 2. Figure 2(a) is an original image. Figure 2(b) is an image obtained by modifying the image of Fig. 2(a) by (i) applying the method of Fig. 1(a), (ii) modifying the watermarked image by adding 1 to each pixel within a small rectangular area, (iii) applying the method of Fig. 1 (b), and (iv) marking the suspect pixels by a respective black dot. From the cluster of black dots at the upper left portion of the image, it can easily be judged that the area where the watermarked data was modified in step (ii) is the one marked as "tampered area". Thus, the true tampering position can be inferred based on the cluster.

Note that the modification made in step (ii) is a very minor one. The fact that most of these modified pixels have been detected shows that the proposed watermarking scheme is very sensitive.

We now turn to discussing various modifications which can be made to the first embodiment within the scope of the present invention.

Firstly, the number of subsections can be varied, as can the manner in which the subsections are defined. Since in the first embodiment the watermark bitmap is embedded by modifying the data values in subsection 11, subsection 11 can be selected so that it occupies an area which is not visually significant, for example, the edge area of an image. Note that the only requirement for partitioning the image into subsections is that the number of pixels in each subsection should be approximately the same.

Some examples are shown in Figures 3(a) and 3(b). In Fig. 3(a) only three subsections are defined, and the first subsection (corresponding to subsection 11 in Fig. 1(a)) is a non-contiguous area, composed of the four corners of the image. In Fig. 3(b) the first subsection (corresponding to subsection 11 in Fig. 1 (a)) is an edge region of the image. As compared to the definition of subsections in Fig. 1(a), the definitions of Figs. 3(a) and 3(b) would reduce the visible change to the image caused by the watermarking process, since the modified areas are on the image edges.

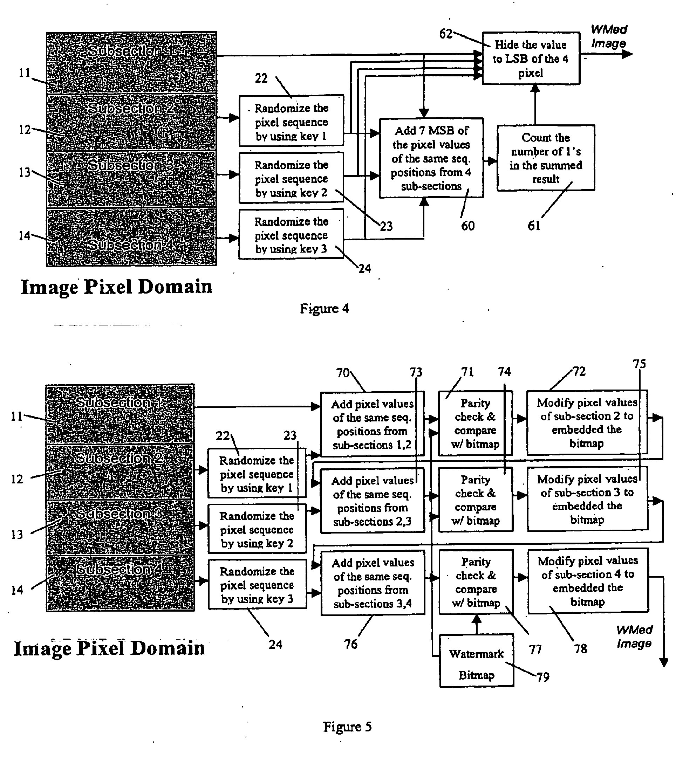

A second embodiment of the invention is illustrated in Fig. 4. This variant of the first embodiment further increases the ability to detect data alteration. It does not use a watermark bitmap. Specifically, in the second embodiment, instead of embedding a watermark bitmap based on the parity of the summed data values of the four pixels of the respective group, the sum of the 7 most significant bits (MSBs) of the four pixels of the group is calculated, and the number of 1's in this total (not the parity of the 1's) is hidden in the respective lowest significant bit (LSB) of the four pixels (assuming that the image data value is an 8-bit value). For an image with 8-bit data values, the sum of the 7 MSBs of the four pixels (expressed in binary) will not exceed 9 bits, so the number of 1's is at most 9. A value in the range 0 to 9 can be encoded in 4 bits. Thus, the LSB positions of the 4 pixels are enough to hide the number of 1's.

The steps of this method are shown in Fig. 4. As in the method of Fig. 1 (a), the four subsections 11, 12, 13, 14 are defined (in any of the ways discussed above), and permuted sequences S2, S3, S4 are obtained. The methods for doing this are as explained above with reference to Fig. 1(a), so these steps are denoted by the same reference numerals 22, 23, 24. In step 60, the sum of the 7 MSBs of each pixel is obtained for each group. In step 61, the number of 1's in this sum is calculated for each group. In step 62, this value, converted into binary, is hidden in the respective LSB of the pixels of the group.

A drawback of this second embodiment is that more image data values need to be modified. Thus the watermarked image quality may become poorer than in the first embodiment.

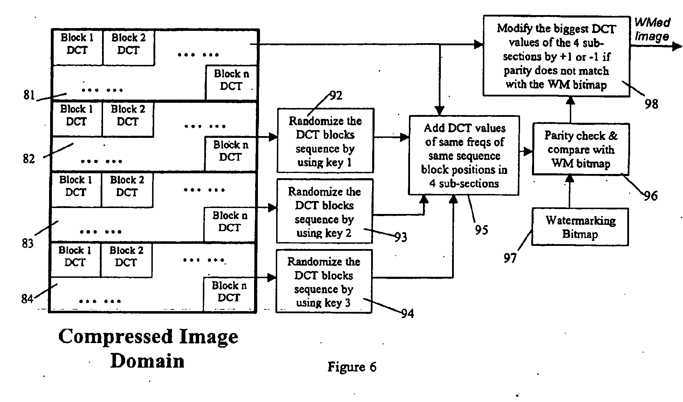

A third embodiment of the invention is illustrated in Fig. 5. This embodiment is a concatenated fragile WM scheme, in which three bits of a watermark pattern (optionally generated in step 79) are embedded in each group of pixels. The first steps of the third embodiment are the same as in the first and second embodiments: the sequences S2, S3 and S4 are obtained using a secret key (steps 22, 23, 24), so that groups of 4 pixels in the respective subsections are obtained. In step 70, instead of directly summing the four data values from all four subsections, the corresponding data values of subsections 1 and 2 are first added together. Then in step 71 a check is done of the parity of the number of 1's in this result with a first bit of the watermark bitmap. If this parity check does not match then in step 72 the first watermark bit is embedded by modifying the data value in (say) subsection 2.

Then, in step 73, the modified data value of the pixel in subsection 2 is added to the corresponding data value of the pixel of the group in subsection 3. In steps 74 and 75, a second watermark bit from the watermark bitmap is embedded into this new sum by modifying the data value of subsection 3.

In steps 76, the modified data value of the pixel in subsection 3 is added to the corresponding data value of the pixel of the group in subsection 4. In steps 77 and 78, a third bit of the watermark bitmap is embedded in the data values of the pixel of the group in subsection 4.

This third embodiment of the invention can be used to improve the sensitivity of the watermarking to alteration. For example, if any tampering modifies a pixel in subsection 2, the alteration may be detected either from the first watermark bit (which is embedded into subsections 1 and 2) or from the second bit (which is embedded into subsections 2 and 3) or both. Therefore subsection 2 can be considered as protected by double watermarks and thus is more sensitive to alteration. In addition, the locating capability is also improved. For example, if a watermark bitmap alteration is found in the first watermark bit while not found in the second and third watermark bits, it can be judged that the tampering altered the pixel in subsection 1. The drawback of the concatenated fragile WM is that more pixel modifications are required to embed more watermark bits.

The present invention may be applied also to compressed images and/or the video domain such as JPEG, MPEG2, MPEG4, etc. We will take JPEG as an example. In the JPEG compression scheme, the image is first divided into many blocks. Usually, each block consists of $8 \times 8$ pixels. A two dimensional DCT is performed within each block, followed by the quantization of the DCT coefficients. The quantized DCT coefficients are then put in a one-dimensional vector by the so-called zigzag scan, followed by the run-length coding and entropy coding (Huffman coding).

A fourth embodiment of the invention, suitable for combination with the JPEG compression scheme, is illustrated in Fig. 6. To embed a fragile watermark into a JPEG image, the block is used as the basic manipulating element ("item") in place of the pixel as in the first three embodiments. The data values used in Fig. 6 are the quantized DCT coefficients for the image, arranged in 8x8 blocks (thus, there are 64 data values per item). The image is partitioned into subsections in this compressed image domain. These subsections may be the same as in the first three embodiments, and there is DCT data 81, 82, 83, 84 for each of these subsections. In place of a permutation based on pixels, in the fourth embodiment the block sequences in subsections 2, 3 and 4 are randomly permuted (steps 92, 93, 94). The quantized DCT coefficients of the corresponding blocks in 4 subsections are selected. For each group, a plurality of DCT coefficients which occupy the same positions within the different blocks of the group are added (step 95) together as follows:

$$V(i, j) = d_{1,l}(i, j) + d_{2,k}(i, j) + d_{3,m}(i, j) + d_{4,n}(i, j) \qquad (4)$$

where $V(i,j)$ is the summed value of the DCT coefficients at the $i^{th}$ row and $j^{th}$ column within a block, $d_{1,l}(i,j)$ is the $i^{th}$ row and $j^{th}$ column quantized DCT coefficient of the $l^{th}$ block in subsection 1. $k, m$ and $n$ are the corresponding blocks in subsections 2, 3 and 4. In step 96, the parity of the number of 1's in $V(i,j)$ is compared with a respective bit of a watermark bitmap 97. If they do match, the above-described + or -1 modification process to one of these DCT coefficients is made.

Optionally, however, the embodiment do not always modify subsection 1 but instead selects one of the biggest coefficients (e.g. the biggest itself) among the 4 to modify. The reason is that by selecting the biggest coefficients, the impact of the modification can be kept to minimum. Thus the image quality is better preserved and the compressed image size is also less affected. For example, if one or more of the blocks is in the flat area of an image, most of its (their) DCT coefficients after quantization are zeros. Thus if +1 or -1 is added to these coefficients, it will result in a relatively larger change in the decompressed image and also an increase in the JPEG image size since the Huffman code will be changed a lot. Since the 4 subsections are far apart from each other, it is highly possible that if one or more of the blocks is in the flat area of an image (e.g. $d_{1,l}(i,j)$ and $d_{3,m}(i,j)$ in (4)), the other blocks (e.g. $d_{2,k}(i,j)$ and $d_{4,n}(i, j)$ in (4)) may be in an area with large pixel variation so that they will have large DCT coefficients. The +1 or -1 modification imparts a relatively small change to these large DCT coefficients, thus making the watermark less visible and with also less change in the encoded file length.

Note that optionally, a watermark bitmap may not be embedded in every group of four corresponding DCT coefficients. Due to the quantization, many of the high frequency coefficients are zeros for high compression ratio image and thus are not suitable for embedding a watermark bit. We have found that embedding watermark bits into low and middle frequency components proves to be a better choice due to both the larger original DCT coefficients and smaller quantization steps. Preferably, the DC (i.e. zero spatial frequency) coefficient should not be used to embed any watermark bits since this will change the local brightness of the block, which is often very visible.

Since multiple DCT coefficients within one block are used to embed watermark bits, any disagreement in any one of the DCT coefficients in a block can be considered as an alteration to that block. Of course, the minimum altering location can only be identified to a block instead of a pixel.

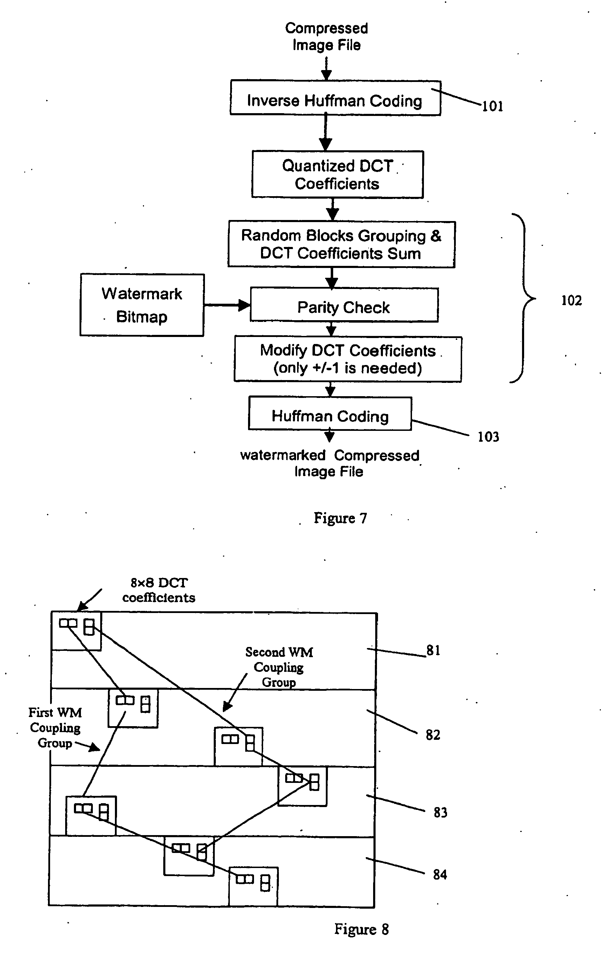

As mentioned above, Fig. 6 assumes that quantized DCT coefficients are available. Fig. 7 presents another variant process, showing the steps if the compressed JPEG image file is available instead of the quantized DCT coefficients. This embodiment partly decodes the JPEG file to get the quantized DCT coefficients (step 101), and then embeds the watermark as in Fig. 6 (shown in Fig. 7 as the set of steps 102). After embedding the fragile watermark, the modified DCT coefficients are Huffman encoded (step 103) to obtain the watermarked compressed image file. Based on the proposed scheme as before, the change in image size of the watermarked JPEG file will be kept very small. There are 2 main reasons for this: (1) by selecting largest DCT coefficients among the 4 subsections to embed the WM bit, (2) most of the DCT coefficients are not changed (on average, 87.5% are not changed if 4 subsections are used. Furthermore, if within each block only a subset of the DCT coefficients are used to embed watermark bits, the unchanged DCT coefficients are much more).

As mentioned above, for the block-based watermark scheme, the minimum locating area is of the size of a block. Thus, by analogy with pixel image domain case of the first embodiment, if one error is detected in the watermark bitmap, any of the 4 blocks associated with the error position may be the source. Fig. 8 illustrates schematically a further embodiment of the invention which increases the error locating ability by employing a double watermark scheme. Each block is associated with two respective WM schemes. However, the two schemes have different random sequences to arrange the blocks. For example, in the first watermark scheme, the blocks associated with block 1 of subsection 1 may be blocks 138, 439, 76 of subsections 2, 3 and 4, respectively, i.e. grouped as (1, 138, 439, 76). In the second WM scheme, the group including block 1 of the first subsection may be blocks (1, 275, 93, 347). The first group is used to embed a first WM bitmap in the first group DCT coefficients in the block, e.g. by modifying $d(3,4)$ and $d(3,5)$. Similarly, the DCT coefficients $d(3,8)$ and $d(4,8)$ may be modified to embed the second bitmap. Thus, if both the first and second groups are detected to contain error, it can be judged that the true tampering position is in block 1 of subsection 1 as it is the common element among these two groups.

Although only a few embodiments of the invention have been described in detail, many variants are possible within the scope of the invention as will be clear to a skilled reader. For example, many features in the various embodiments above may be combined.

Furthermore, the above compressed domain watermarking process can also be extended to the video domain, e.g. for use in MPEG2, MPEG4, H.264, etc. One example is as following: for the intra frame of the video compression, a similar process as above can be used. The watermark bitmap to be embedded can be such information as the name of the source, the date and time of the frame, etc. On the other hand, for the inter frame, the watermark can be embedded into the motion predicting errors. In this case, usually fewer watermark bits can be embedded into one inter frame. Thus, the watermark bitmap can be simply the frame number etc. In this way, we can check any data alteration as well as any insertion or loss of a frame of the video sequence.

Furthermore, it is also possible to vary the watermark embedding and detecting procedure to other formats without essential changes in the basic structure of this invention, as defined by the claims.

Furthermore, whereas in the embodiments explained above, watermarking is performed for all items of the content data, this is not a requirement of the invention. Instead, for example, in the case of content data which is image data, optionally only a certain proportion (e.g. half) of the pixels may be associated in groups, and subject to watermarking.

Furthermore, all of the above embodiments above in which a watermark bitmap is embedded into the data can be used as a means of data hiding. In this case, the watermark bitmap is the additional data/information to be hidden in an image. In the detecting process, the recovered bitmap from the watermarked image is the targeted information. In this case, for example, in Fig. 1(b) steps 52 and 53 are not performed. Step 52 only performs the parity check and outputs the parity results.

**References**

[1]. B B. Zhu, M. D. Swanson and A. H. Tewfik "When Seeing Isn't Believing" IEEE Signal Processing Magazine, Vol.21, No.2, 2004, pp40~49

[2]. M. M. Yeung and F. Mintzer "An Invisible Watermarking Technique for Image Verification" Proc. IEEE Int. Conf. Image Processing, 1997,pp680~683

[3]. J. Fridrich, M. Goljan and A. C. Baldoza "New Fragile Authentication Watermark for Images" Proc IEEE Int. Conf. Image Processing, 2000, pp428~437

[4]. Steve Walton "Image Authentication for a Slippery New Age" Dr. Dobb's J., Vol.20, No.4, 1995, pp18~26

[5]. P. W. Wong and N. Memon "Secret and Public Key Image Watermarking Schemes for Image Authentication and Ownership Verification" IEEE Trans. On Image Processing, Vol. 10, No. 10, 2001, pp1593~1601

[6]. V. Bhaskaran and V. Ratnakar "Fragile Watermarks for Detecting Tampering in Images" U. S. Patent No.

6,064,764, May, 2000

[7]. R. L. Adler, B. P. Kitchens, C, P. Tresser and C. W. Wu "Compressed Image Authentication and Verification" U. S. Patent No. 6,275,599, Aug., 2001

[8]. S. F. Chang and C. Y. Lin "Method and Apparatus for Image Authentication" U.S. Patent No. 6,532,541, Mar., 2003

[9]. M. A. Isnardi and C. Musgrave "Method and Apparatus for Embedding a Watermark into a Digital Image or Image Sequence", U. S. Patent No. 6,037,984, Mar., 2000

**Claims**

1. A method of watermarking content data composed of a set of items, in which each item is associated with at least one data value, the method including:

   partitioning the content data into a plurality of subsections (11..14) having same size;
   using (22..24) at least one secret key to associate a plurality of the items into groups, each group including an item from each of the subsections (11..14); and
   modifying (33) at least one item within each group using a value derived from all items in the group, thereby producing modified content data.

2. A method according to claim 1 wherein,
   for all groups, said modified item is in the same one of said subsections (11..14).

3. A method according-to claim 1 or 2, wherein said groups are defined by:

   for each subsection (11..14) except a first of said subsections (11..14), using (22..24) said at least one secret key to define a respective permuted sequence of the items of that subsection (11..14), and
   defining each group as a respective item of the first subsection (11..14) and corresponding items of the other subsections (11..14) according to the respective permuted sequences.

4. A method according to any preceding claim, wherein
   said modification (33) embeds at least one respective bit from a string of watermark data (32) into the set of data values associated with each said group of items.

5. A method according to claim 4, wherein
   said modification (33) is obtained by using (30) data values associated with each item of each group to derive at least one binary characteristic value, comparing (31) each characteristic value to a respective said bit of the watermark data (32), and according to the result of the comparison (31) modifying (31) at least one of the data values of the group thereby changing the characteristic value.

6. A method according to claim 5, wherein
   there is only one characteristic value for each group, and it is a binary parity value.

7. A method according to claim 5, wherein
   there are multiple characteristic values for each group, different ones of the characteristic values being derived from different respective subsets of the group of items

8. A method according to anyone of claims 1 to 3, wherein
   the modification (33) introduces a redundancy into the content data.

9. A method according to claim 8, wherein
   the modification (33) modifies at least one least significant bit of at least one data value of the group according to a characteristic value obtained using at least one most significant bit of at least one of the data values of the group.

10. A method according to any preceding claim, wherein
    the items are pixels of a still image or of a frame of a video sequence.

**11.** A method according to claim 10 when dependent upon claim 2, wherein
said subsection (11..14) including the modified items is a peripheral subsection of the still image or frame.

**12.** A method according to claim 10 or 11, wherein
the data values are gray scale values.

**13.** A method according to claim 10 or 11, wherein
the still image or video frame is a colour image or different colour channels, and data values are luminance values of the image or different colour channels.

**14.** A method according to any preceding claim, wherein
the content data is image data which has been divided into blocks and transformed on a block-by-block basis, and the data values are transformed data.

**15.** A method according to claim 14, wherein
the transformed data is image data transformed by a DCT or an equivalent such as an integer transform and composed of data values which are amplitudes of spatial frequencies.

**16.** A method according to claim 15, wherein
said modification step is performed only for data values which are of intermediate spatial frequency.

**17.** A method according to claim 15, wherein
in said step of modifying (33) at least one data value of a group of data values, a data value is selected which is in the upper half of the data values of the group, and at least the selected data value is modified.

**18.** A method according to anyone of claims 14 to 17, wherein
the items are blocks of the transformed data.

**19.** A method according to anyone of claims 14 to 17, wherein
the items are spatial frequency amplitudes within the blocks of the data, each group consisting of items at the same respective position within respective blocks of data.

**20.** A method according to claim anyone of claims 14 to 19, wherein
a step of deriving the content data by decompressing (101) compressed data, and a step of recompressing (103) the modified content data.

**21.** A method according to any preceding claim, further comprising:

using at least one further secret key to associate a plurality of the items into second groups, each second group including an item from each of the subsections; and
modifying at least one item within each second group using a value derived from all items in the second group, thereby producing modified content data

**22.** An authentication method for detecting an alteration made to watermarked content data composed of a set of items, in which each item is associated with a data value, the watermarked content data having been produced by:

partitioning the content data into a plurality of subsections (11..14) having same size;
using (22..24) at least one secret key to associate a plurality of the items into groups, each group including an item from each of the subsections (11..14); and
modifying (33) at least one item within each group using a value derived from all items in the group, thereby producing the watermarked content data, said authentication method including the steps of:

using (42..44) said at least one secret key to obtain said groups of items; and
determining (54) whether the groups of data values are consistent with having been produced by said modifying step (33) by using (52) the data values of said groups of items, and in the case that this determination is negative marking (54) the data values of the group being alternated.

**23.** A method of using watermarked content data obtained from content data to detect additional data hidden in the watermarked content data, the watermarked content data having been produced by:

partitioning the content data into a plurality of subsections (11..14) having same size;
using (22..24) at least one secret key to associate a plurality of the items into groups, each group including an item from each of the subsections (11..14); and
modifying (33) at least one item within each group using a value derived from all items in the group to embed at least one respective bit from a string of watermark data, the method including the steps of:

using (42..44) said at least one secret key to obtain said groups of items; and
using the data values of said groups of items to extract the additional data.

24. An apparatus arranged to perform a method according to anyone of claims 1 to 23.

25. A computer program product containing program instructions operative, when run by a computer system, to cause the computer system to perform a method according to anyone of claims 1 to 23.


**Patentansprüche**

1. Verfahren zum Einführen von Wasserzeichen in Inhaltsdaten, die aus einem Satz von Datenworten bestehen, in welchem Satz jedes Datenwort mit mindestens einem Datenwert assoziiert ist, wobei das Verfahren folgende Schritte umfasst:

Aufteilen der Inhaltsdaten in eine Vielzahl von Unterdatenabschnitten (11...14) gleicher Größe;
Verwenden (22...24) mindestens eines Geheimschlüssels, um eine Vielzahl von Datenworten in Gruppen zu ordnen, wobei jede Gruppe ein Datenwort aus jedem Unterdatenabschnitt (11...14) enthält; und
Modifizieren (33) mindestens eines der Datenworte innerhalb jeder Gruppe durch Verwenden eines von allen Datenworten in der Gruppe abgeleiteten Wertes, wodurch modifizierte Inhaltsdaten erzeugt werden.

2. Verfahren nach Anspruch 1, wobei
sich das modifizierte Datenwort bei allen Gruppen in ein und dem gleichen Unterdatenabschnitt (11...14) befindet.

3. Verfahren nach Anspruch 1 oder 2, wobei
die Gruppen wie folgt definiert werden:

für jeden Unterdatenabschnitt (11...14), ausgenommen ein erster der Unterunterdatenabschnitte (11...14), wird der mindestens eine Geheimschlüssel verwendet (22...24), um eine entsprechend vertauschte Sequenz von Datenworten dieses Unterdatenabschnittes (11...14) zu definieren,

wobei entsprechend den vertauschten Sequenzen als ein Datenwort des ersten Unterdatenabschnittes (11...14) bzw. als Datenwort der anderen Unterdatenabschnitte (11...14) jeweils eine Gruppe definiert wird.

4. Verfahren nach einem der vorher stehenden Ansprüche, wobei
durch die Modifikation (33) mindestens ein entsprechendes Bit aus der Folge von Wasserzeichen-Daten (32) in den Satz von Datenwerten einbettet wird, welche Datenwerte jeweils mit einer Gruppe von Datenworten assoziiert sind.

5. Verfahren nach Anspruch 4, wobei
die Modifikation (33) durch Verwendung (30) von Datenwerten erreicht wird, welche jeweils mit einem Datenwort jeder Gruppe assoziiert sind, um mindestens einen charakteristischen Binärwert abzuleiten, indem jeder charakteristische Wert mit einem entsprechenden Bit der Wasserzeichen-Daten (32) verglichen wird (31), und indem mindestens einer der Datenwerte der Gruppe entsprechend dem Ergebnis des Vergleiches (31) modifiziert wird (31), wodurch der charakteristische Wert geändert wird.

6. Verfahren nach Anspruch 5, wobei
es nur einen charakteristischen Wert für jede Gruppe gibt, und dass dieser ein binärer Paritätswert ist.

7. Verfahren nach Anspruch 5, wobei
es mehrere charakteristische Werte für jede Gruppe gibt, wobei die sich unterscheidenden charakteristischen Werte von sich entsprechend unterscheidenden Unterabschnitten der Gruppe von Datenworten abgeleitet werden.

8. Verfahren nach einem der Ansprüche 1 bis 3, wobei
die Modifikation (33) eine Redundanz in die Inhaltsdaten einführt.

9. Verfahren nach Anspruch 8, wobei
durch die Modifikation (33) mindestens ein Bit niedrigster Signifikanz mindestens eines Datenwertes der Gruppe entsprechend einem charakteristischen Wert modifiziert wird, der durch Verwendung mindestens eines Bits höchster Signifikanz mindestens eines der Datenwerte der Gruppe gewonnen wird.

10. Verfahren nach einem der vorher stehenden Ansprüche, wobei
die Datenworte Pixel eines stehenden Bildes oder eines Rahmens einer Videosequenz sind.

11. Verfahren nach Anspruch 10, wenn dieser abhängig von Anspruch 2 ist, wobei
der die modifizierten Datenworte enthaltende Unterdatenabschnitt (11...14) ein peripherer Unterabschnitt eines stehenden Bildes oder Rahmens ist.

12. Verfahren nach Anspruch 10 oder 11, wobei
die Datenwerte Grauskalawerte sind.

13. Verfahren nach Anspruch 10 oder 11, wobei
das stehende Bild oder der Videorahmen ein Farbbild oder unterschiedliche Farbkanäle sind, und dass die Datenwerte Luminanzwerte des Bildes oder der verschiedenen Farbkanäle sind.

14. Verfahren nach einem der vorher stehenden Ansprüche, wobei
die Inhaltdaten Bilddaten sind, welche in Blöcke geteilt und auf einer Blockzu-Block-Basis transformiert wurden, und dass die Datenwerte transformierte Datenwerte sind.

15. Verfahren nach Anspruch 14, wobei
die transformierten Daten Bilddaten sind, die durch eine DCT-Transformation oder eine äquivalente Transformation, wie eine Integer-Transformation transformiert und aus Datenwerten zusammengesetzt worden sind, welche Amplituden von Spatial-Frequenzen sind.

16. Verfahren nach Anspruch 15, wobei
die Modifikationsstufe nur für Datenwerte durchgeführt wird, welche Amplituden einer Zwischen-Spatial-Frequenz sind.

17. Verfahren nach Anspruch 15, wobei
in der Stufe, in der mindestens ein Datenwert einer Gruppe von Datenwerten modifiziert (33) wird, ein Datenwert ausgesucht wird, welcher sich in der oberen Hälfte der Datenwerte der Gruppe befindet, und dass mindestens der ausgewählte Datenwert modifiziert wird.

18. Verfahren nach einem der Ansprüche 14 bis 17, wobei
die Datenwerte Blöcke von transformierten Daten sind.

19. Verfahren nach einem der Ansprüche 14 bis 17, wobei
die Datenworte Spatial-Frequenz-Amplituden innerhalb der Blöcke von Daten sind, und dass jede Gruppe aus Datenworten besteht, die sich in der gleichen entsprechenden Position innerhalb der betreffenden Blöcke von Daten befinden.

20. Verfahren nach einem der Ansprüche 14 bis 19, aufweisend
einen Schritt, mit dem die Inhaltsdaten durch Dekompression (101) komprimierter Daten abgeleitet werden, und einen Schritt der Rekompression (103) der modifizierten Inhaltsdaten.

21. Verfahren nach einem der vorher stehenden Ansprüche, wobei
ferner mindestens ein weiterer Geheimschlüssel verwendet wird, um eine Vielzahl von Datenworten in zweite Gruppen einzuordnen, wobei jede zweite Gruppe ein Datenwort von jedem der Unterdatenabschnitte enthält, und mindestens ein Datenwort innerhalb der zweiten Gruppe modifiziert wird, wobei ein Wert verwendet wird, der von allen Datenworten in der zweiten Gruppe abgeleitet wird, wodurch die modifizierten Inhaltdaten produziert werden.

22. Authentifizierungsverfahren zur Aufdeckung von Änderungen, die an mit Wasserzeichen versehenen Inhaltsdaten vorgenommen wurden, welche aus einem Satz von Datenwörtern bestehen, wobei jedes Datenwort mit einem Datenwert assoziiert ist, und wobei die mit Wasserzeichen versehenen Inhaltsdaten auf folgende Weise erzeugt wurden:

Unterteilung der Inhaltdaten in eine Vielzahl von Unterdatenabschnitte (11...14) gleicher Größe;
Verwenden (22...24) mindestens eines Geheimschlüssels, um eine Vielzahl von Datenworten in Gruppen einzuordnen, wobei jede Gruppe ein Datenwort von jedem der Unterdatenabschnitte (11...14) enthält; und
Modifizieren (33) mindestens eines Datenwortes innerhalb jeder Gruppe, wobei ein von allen Datenworten in der Gruppe abgeleiteter Wert verwendet wird, wodurch die mit Wasserzeichen versehenen Inhaltsdaten erzeugt werden,

wobei das Authentifizierungsverfahren die folgenden Stufen einschließt:

Verwenden (42...44) mindestens eines Geheimschlüssels um eine Gruppe von Datenwörtern zu gewinnen; und
Feststellen (54), ob die Gruppen von Datenwerten übereinstimmen mit solchen, die durch die Modifizierungsstufe (33) hergestellt worden sind, indem Datenwerte der Gruppen von Datenwörtern (52) verwendet werden, wobei für den Fall, dass die Feststellung negativ ist, die Datenwerte der veränderten Gruppen markiert (54) werden.

23. Verfahren zum Verwenden von mit Wasserzeichen versehenen Inhaltsdaten, die von Inhaltsdaten gewonnen wurden, um zusätzliche Daten zu ermitteln, die in den mit Wasserzeichen versehenen Inhaltsdaten versteckt sind, wobei die mit den Wasserzeichen versehenen Inhaltsdaten auf folgende Weise erzeugt worden sind:

Einteilen der Inhaltsdaten in eine Vielzahl von Unterabschnitten (11...14) gleicher Größe;
Verwenden (22...24) mindestens eines Geheimschlüssels, um eine Vielzahl der Datenwörter in Gruppen einzuordnen, wobei jede Gruppe ein Datenwort aus jeder der Untergruppen (11...14) enthält; und
Modifizieren (33) mindestens eines Datenwortes innerhalb jeder Gruppe unter Verwendung eines Wertes, der von allen Datenwörtern in der Gruppe abgeleitet wurde, um mindestens ein entsprechendes Bit aus einer Folge von Wasserzeichen-Daten einzubetten, wobei das Verfahren die folgenden Stufen umfasst:

Verwenden (42...44) mindestens eines Geheimschlüssels, um eine Gruppe von Datenwörtern zu erhalten; und
Verwenden der Datenwerte der Gruppe von Datenworten, um die zusätzlichen Daten zu extrahieren.

24. Gerät zur Durchführung des Verfahrens entsprechend einem der Ansprüche 1 bis 23.

25. Computerprogramm-Produkt, dass Programmbefehle enthält, die umgesetzt werden, wenn sich das Computersystem in Betrieb befindet, um das Computersystem zu veranlassen, ein Verfahren nach einem der Ansprüche 1 bis 23 durchzuführen.

**Revendications**

1. Procédé consistant à tatouer numériquement des données de contenu composées d'un ensemble d'éléments, dans lequel chaque élément est associé à au moins une valeur de données, le procédé comprenant :

le partage des données de contenu en une pluralité de sous-sections (11..14) ayant la même taille ;
l'utilisation (22..24) d'au moins une clé secrète pour associer une pluralité des éléments dans des groupes, chaque groupe comprenant un élément provenant de chacune des sous-sections (11..14) ; et
la modification (33) d'au moins un élément à l'intérieur de chaque groupe en utilisant une valeur dérivée de tous les éléments dans le groupe, produisant ainsi des données de contenu modifiées.

2. Procédé selon la revendication 1, dans lequel,
pour tous les groupes, ledit élément modifié se trouve dans la même desdites sous-sections (11..14).

**3.** Procédé selon la revendication 1 ou 2, dans lequel lesdits groupes sont définis par :

pour chaque sous-section (11..14) excepté une première desdites sous-sections (11..14), l'utilisation (22..24) de ladite au moins une clé secrète pour définir une séquence permutée respective des éléments de cette sous-section (11..14), et
la définition de chaque groupe comme un élément respectif de la première sous-section (11..14) et des éléments correspondants des autres sous-sections (11..14) conformément aux séquences permutées respectives.

**4.** Procédé selon l'une quelconque des revendications précédentes, dans lequel ladite modification (33) incorpore au moins un bit respectif provenant d'une chaîne de données tatouées numériquement (32) dans l'ensemble de valeurs de données associé à chacun desdits groupes d'éléments.

**5.** Procédé selon la revendication 4, dans lequel ladite modification (33) est obtenue en utilisant (30) les valeurs de données associées à chaque élément de chaque groupe pour dériver au moins une valeur de caractéristique binaire, en comparant (31) chaque valeur de caractéristique à un dit bit respectif des données tatouées numériquement (32), et en fonction du résultat de la comparaison (31), en modifiant (31) au moins une des valeurs de données du groupe, changeant ainsi la valeur de caractéristique.

**6.** Procédé selon la revendication 5, dans lequel il y a une seule valeur de caractéristique pour chaque groupe, et c'est une valeur de parité binaire.

**7.** Procédé selon la revendication 5, dans lequel il y a de multiples valeurs de caractéristiques pour chaque groupe, parmi lesquelles différentes valeurs de caractéristiques sont dérivées de différents sous-ensembles respectifs du groupe d'éléments.

**8.** Procédé selon l'une quelconque des revendications 1 à 3, dans lequel la modification (33) introduit une redondance dans les données de contenu.

**9.** Procédé selon la revendication 8, dans lequel la modification (33) modifie au moins un bit de poids faible d'au moins une valeur de données du groupe en fonction d'une valeur de caractéristique obtenue en utilisant au moins un bit de poids fort d'au moins une des valeurs de données du groupe.

**10.** Procédé selon l'une quelconque des revendications précédentes, dans lequel les éléments sont des pixels d'une image fixe ou d'un cadre d'une séquence vidéo.

**11.** Procédé selon la revendication 10 lorsqu'elle est dépendante de la revendication 2, dans lequel ladite sous-section (11..14) comprenant les éléments modifiés est une sous-section périphérique de l'image fixe ou du cadre.

**12.** Procédé selon la revendication 10 ou 11, dans lequel les valeurs de données sont des valeurs d'échelle de gris.

**13.** Procédé selon la revendication 10 ou 11, dans lequel l'image fixe ou le cadre vidéo est une image en couleurs ou différents canaux de couleurs, et les valeurs de données sont des valeurs de luminance de l'image ou des différents canaux de couleurs.

**14.** Procédé selon l'une quelconque des revendications précédentes, dans lequel les données de contenu sont des données image qui ont été divisées en blocs et transformées bloc par bloc, et les valeurs de données sont des données transformées.

**15.** Procédé selon la revendication 14, dans lequel les données transformées sont des données image transformées grâce à une transformée en cosinus discrète ou un équivalent comme une transformée en nombre entier et composées de valeurs de données qui sont des amplitudes de fréquences spatiales.

**16.** Procédé selon la revendication 15, dans lequel ladite étape de modification est mise en oeuvre uniquement pour des valeurs de données qui sont d'une fréquence spatiale intermédiaire.

17. Procédé selon la revendication 15, dans lequel
dans ladite étape consistant à modifier (33) au moins une valeur de données d'un groupe de valeurs de données, une valeur de données est sélectionnée dans la moitié supérieure des valeurs de données du groupe, et au moins la valeur de données sélectionnée est modifiée.

18. Procédé selon l'une quelconque des revendications 14 à 17, dans lequel
les éléments sont des blocs des données transformées.

19. Procédé selon l'une quelconque des revendications 14 à 17, dans lequel
les éléments sont des amplitudes de fréquences spatiales à l'intérieur des blocs des données, chaque groupe se composant d'éléments au même emplacement respectif à l'intérieur des blocs de données respectifs.

20. Procédé selon l'une quelconque des revendications 14 à 19, dans lequel
une étape consistant à dériver les données de contenu en décompressant (101) des données compressées, et une étape consistant à compresser à nouveau (103) les données de contenu modifiées.

21. Procédé selon l'une quelconque des revendications précédentes, comprenant en outre

l'utilisation d'au moins une clé secrète supplémentaire pour associer une pluralité des éléments dans des deuxièmes groupes, chaque deuxième groupe comprenant un élément provenant de chacune des sous-sections ; et
la modification d'au moins un élément à l'intérieur de chaque deuxième groupe en utilisant une valeur dérivée de tous les éléments dans le deuxième groupe, produisant ainsi des données de contenu modifiées.

22. Procédé d'authentification destiné à détecter une altération causée à des données de contenu tatouées numériquement composées d'un ensemble d'éléments, dans lequel chaque élément est associé à une valeur de données, les données de contenu tatouées numériquement ayant été produites en :

partageant les données de contenu en une pluralité de sous-sections (11..14) ayant la même taille ;
utilisant (22..24) au moins une clé secrète pour associer une pluralité des éléments dans des groupes, chaque groupe comprenant un élément provenant de chacune des sous-sections (11..14) ; et
modifiant (33) au moins un élément à l'intérieur de chaque groupe en utilisant une valeur dérivée de tous les éléments dans le groupe, produisant ainsi les données de contenu tatouées numériquement,
ledit procédé d'authentification comprenant les étapes consistant à :

utiliser (42..44) ladite au moins une clé secrète pour obtenir lesdits groupes d'éléments ; et
déterminer (54) si les groupes de valeurs de données sont en accord avec le fait d'avoir été produits grâce à ladite étape de modification (33) en utilisant (52) les valeurs de données desdits groupes d'éléments, et dans le cas où cette détermination est négative, en tatouant (54) les valeurs de données du groupe qui est remplacé.

23. Procédé consistant à utiliser des données de contenu tatouées numériquement obtenues à partir de données de contenu pour détecter des données supplémentaires cachées dans les données de contenu tatouées numériquement, les données de contenu tatouées numériquement ayant été produites en :

partageant les données de contenu en une pluralité de sous-sections (11..14) ayant la même taille ;
utilisant (22..24) au moins une clé secrète pour associer une pluralité des éléments dans des groupes, chaque groupe comprenant un élément provenant de chacune des sous-sections (11..14) ; et
modifiant (33) au moins un élément à l'intérieur de chaque groupe en utilisant une valeur dérivée de tous les éléments dans le groupe pour incorporer au moins un bit respectif provenant d'une chaîne de données tatouées numériquement, le procédé comprenant les étapes consistant à :

utiliser (42..44) ladite au moins une clé secrète pour obtenir lesdits groupes d'éléments ; et
utiliser les valeurs de données desdits groupes d'éléments pour extraire les données supplémentaires.

24. Appareil agencé pour mettre en oeuvre un procédé selon l'une quelconque des revendications 1 à 23.

25. Produit de programme informatique contenant des instructions de programme servant, quand il est exécuté par un système informatique, à amener le système informatique à mettre en oeuvre un procédé selon l'une quelconque des revendications 1 à 23.

EP 1 628 257 B1

**Image Pixel Domain**

Figure 1(a)

**Image Pixel Domain**

Figure 1(b)

**Figure 2**

**Figure 3**

## Figure 4

**Image Pixel Domain**

Subsection 1 — 11
Subsection 2 — 12
Subsection 3 — 13
Subsection 4 — 14

22 — Randomize the pixel sequence by using key 1

Randomize the pixel sequence by using key 2

23 — Randomize the pixel sequence by using key 3 — 24

Add 7 MSB of the pixel values of the same seq. positions from 4 sub-sections — 60

Count the number of 1's in the summed result — 61

62 — Hide the value to LSB of the 4 pixel

*WMed Image*

## Figure 5

**Image Pixel Domain**

Subsection 1 — 11
Subsection 2 — 12
Subsection 3 — 13
Subsection 4 — 14

22 23 — Randomize the pixel sequence by using key 1

Randomize the pixel sequence by using key 2

Randomize the pixel sequence by using key 3 — 24

70 73 — Add pixel values of the same seq. positions from sub-sections 1,2

Add pixel values of the same seq. positions from sub-sections 2,3

Add pixel values of the same seq. positions from sub-sections 3,4 — 76

71 74 — Parity check & compare w/ bitmap

Parity check & compare w/ bitmap

Parity check & compare w/ bitmap — 77

72 75 — Modify pixel values of sub-section 2 to embedded the bitmap

Modify pixel values of sub-section 3 to embedded the bitmap

Modify pixel values of sub-section 4 to embedded the bitmap — 78

Watermark Bitmap — 79

*WMed Image*

**Compressed Image Domain**

Figure 6

Compressed
Image File

↓

| Inverse Huffman Coding | 101

↓

| Quantized DCT
Coefficients |

↓

| Random Blocks Grouping &
DCT Coefficients Sum |

| Watermark
Bitmap | → | Parity Check |  } 102

↓

| Modify DCT Coefficients
(only +/-1 is needed) |

↓

| Huffman Coding | 103

↓

watermarked Compressed
Image File

Figure 7

8×8 DCT
coefficients

Second WM
Coupling
Group

81

First WM
Coupling
Group

82

83

84

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030147547 A1
- US 6064764 A
- US 6275599 B
- US 6532541 B
- US 6037984 A

**Non-patent literature cited in the description**

- **B B. ZHU ; M. D. SWANSON ; A. H. TEWFIK.** When Seeing Isn't Believing. *IEEE Signal Processing Magazine,* 2004, vol. 21 (2), 40-49
- **M. M. YEUNG ; F. MINTZER.** An Invisible Watermarking Technique for Image Verification. *Proc. IEEE Int. Conf. Image Processing,* 1997, 680-683
- **J. FRIDRICH ; M. GOLJAN ; A. C. BALDOZA.** New Fragile Authentication Watermark for Images. *Proc IEEE Int. Conf. Image Processing,* 2000, 428-437
- **STEVE WALTON.** Image Authentication for a Slippery New Age. *Dr. Dobb's J.,* 1995, vol. 20 (4), 18-26
- **P. W. WONG ; N. MEMON.** Secret and Public Key Image Watermarking Schemes for Image Authentication and Ownership Verification. *IEEE Trans. On Image Processing,* 2001, vol. 10 (10), 1593-1601
- **V. BHASKARAN ; V. RATNAKAR.** *Fragile Watermarks for Detecting Tampering in Images*
- **R. L. ADLER ; B. P. KITCHENS ; C, P. TRESSER ; C. W. WU.** *Compressed Image Authentication and Verification*
- **S. F. CHANG ; C. Y. LIN.** *Method and Apparatus for Image Authentication*
- **M. A. ISNARDI ; C. MUSGRAVE.** *Method and Apparatus for Embedding a Watermark into a Digital Image or Image Sequence*